Europäisches Patentamt

European Patent Office

Office européen des brevets

(19)

(11) EP 1 460 451 A1

(12) EUROPEAN PATENT APPLICATION

(43) Date of publication:
22.09.2004 Bulletin 2004/39

(51) Int Cl.$^7$: G01S 11/02

(21) Application number: 03290697.6

(22) Date of filing: 18.03.2003

(84) Designated Contracting States:
AT BE BG CH CY CZ DE DK EE ES FI FR GB GR
HU IE IT LI LU MC NL PT RO SE SI SK TR
Designated Extension States:
AL LT LV MK

(71) Applicant: ALCATEL
75008 Paris (FR)

(72) Inventors:
• Paul, Nicolas
75002 Paris (FR)

• Demmerville, Laurent
75014 Paris (FR)
• Brouet, Jérome
75014 Paris (FR)

(74) Representative: Wetzel, Emmanuelle
Alcatel,
Intellectual Property Department
70430 Stuttgart (DE)

(54) **Determining a binary information related to the speed of a mobile terminal**

(57) The invention relates to a method for determining a binary information related to the speed of a mobile terminal in a radio communication network.
According to the present invention, the method comprising the steps of:

- estimating information related to the raw bit error rate on the radio link to the mobile terminal;
- determining an indicator on the variation between successive estimations of said information related to the raw bit error rate;

- comparing the indicator on the variation between successive estimations of said information related to the raw bit error rate with a predefined threshold;
- determining the binary information related to the speed of the mobile terminal depending on the comparison between the indicator on the variation between successive estimations of said information related to the raw bit error rate and the predefined threshold.

Fig 1

Printed by Jouve, 75001 PARIS (FR)

**Description**

**BACKGROUND OF THE INVENTION**

The present invention relates to a method for determining a binary information related to the speed of a mobile terminal in a radio communication network.

Known methods for determining the speed of a mobile terminal are derived from the Doppler spread estimation. Two main groups of techniques to estimate the Doppler spread are the "level crossing rate" based methods and the "covariance / correlation" based methods. Following articles describer such methods:

- "Estimation of Doppler spread and signal strength in mobile communications with applications to handoff and adaptive transmission". Wireless Communications and Mobile Computing 2001.
- "Estimating Velocity Using Diversity Reception". VTC 1994.
- "User Speed Estimation and Dynamic Channel Allocation in Hierarchical Cellular System". VTC 1994.

These methods enable it to obtain an accurate value of the mobile terminal speed. They have a high complexity requiring expensive hardware and high processing power at the physical layer to calculate covariance and autocorrelation.

Many applications to be performed in a radio communication network gain in effectiveness when having an indication on the mobile terminal speed. Nevertheless, for sufficient improvement, the indication on the mobile speed can be much less accurate than the one given by the method using the Doppler spread estimation. For a lot of applications, the comparison of the mobile terminal speed with one or more speed thresholds is sufficient for optimizing the functioning of the radio communication network.

A particular object of the present invention is, as a consequence, to provide a method for determining a binary information related to the speed of a mobile terminal which provides a sufficient information for optimizing the functioning of the radio communication network.

Other objects of the invention are to provide a base station subsystem of a radio communication network adapted to perform this method.

**SUMMARY OF THE INVENTION**

These objects, and others that appear below, are achieved by a method for determining a binary information related to the speed of a mobile terminal according to claim 1, a base station subsystem according to claim 9 and a mobile terminal according to claim 10.

According to the present invention, an information related to the variation of the raw bit error rate on the radio link between a mobile terminal and the radio communication network is estimated. This information is compared to a predefined threshold. The comparison determines univocally if the mobile terminal is has a speed lower than a first speed threshold (low speed terminal) or higher than a second speed threshold (high speed terminal).

In a preferred embodiment of the present invention, the information related to the raw bit error rate is the variation of parameter RX_QUAL as defined in GSM specification 05.08. Preferably, parameter RX_QUAL is estimated over a predefined number of radio blocks sent on the radio link between the mobile terminal and the radio communication network.

In a preferred embodiment of the present invention, the variations of parameter RX_QUAL are filtered to eliminate non representative values.

The method according to the present invention presents the advantage to be easy to implement without hardware changes at the mobile terminal and in the base station subsystem of the radio communication network. Indeed, the evaluation of parameter RX_QUAL is already performed for power control purpose (to minimize the transmitted power while maintaining a target received quality) and link adaptation (to adapt the used coding scheme to the channel quality).

Moreover, the method according to the present invention provide a sufficient accuracy for optimizing a lot of functionality to be performed in radio communication networks. Examples of preferable use of the binary information related to the speed of a mobile terminal as evaluated according to the present invention are speed dependent link adaptation, speed dependent handover, speed dependent adaptive multirate, speed dependent service provision. Such preferable use will be further described below.

Further advantageous features of the invention are defined in the dependent claims.

**BRIEF DESCRIPTION OF THE DRAWINGS**

Other characteristics and advantages of the invention will appear on reading the following description of a preferred embodiment given by way of non-limiting illustrations, and from the accompanying drawings, in which:

- Figure 1 shows a radio communication system where the method according to the present invention can be implemented;
- Figure 2 shows a diagram representing the different steps of the method according to the present invention;
- Figure 3 shows simulation results obtained with the method according to the present invention.

**DETAILED DESCRIPTION OF THE INVENTION**

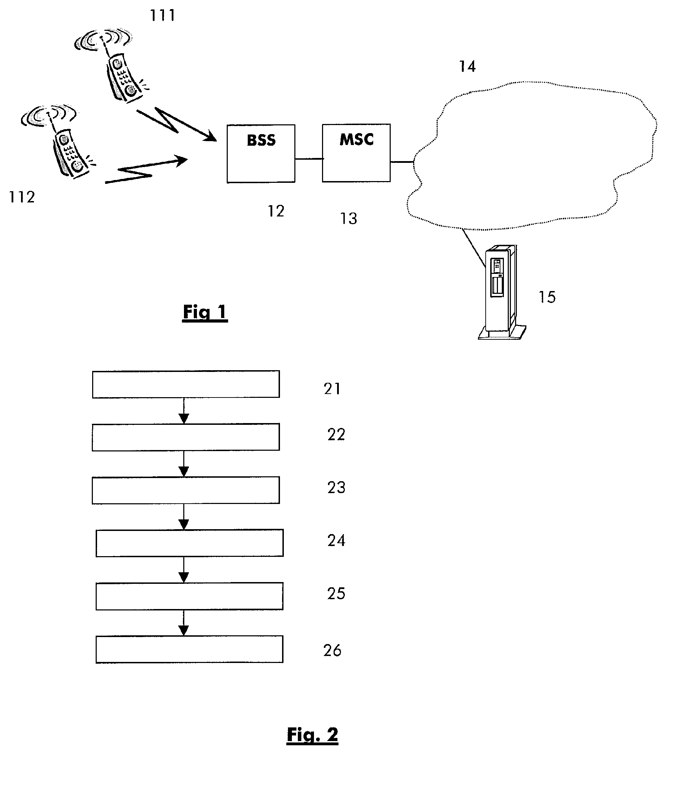

Figure 1 shows a radio communication system where the method according to the present invention can be implemented. The radio communication system comprises two mobile terminals 111, 112, a base station subsystem 12, a mobile switching center 13, further entities of the radio communication system 14 and an application server 15.

Preferably, mobile terminal 111 is a mobile terminal hold for example by a pedestrian in a city and mobile terminal 112 is hold by a user driving a car on a highway.

Mobile terminals 111, 112 are under the coverage of base station subsystem 12 which is itself connected to mobile switching center 13. Mobile switching center 13 is connected to further entities of the radio communication network 14, an application server 15 is also connected to further entities of the radio communication network 14.

For sake of simplicity, a simplified system comprising only one base station subsystem 12 and two mobile terminals 111, 112 is envisaged. The method according to the present invention can however be used in any usual cellular radio communication system 14, preferably in GSM, GPRS, UMTS radio communication systems.

According to the present invention, a binary information related to the speed of the mobile terminals 111, 112 is evaluated in the radio communication system. This binary information enables it to determine if the mobile terminals 111, 112 are "low speed" mobile terminals (i.e. having a speed lower than a first speed threshold or "high speed" mobile terminals (i.e. having a speed higher than a second speed threshold).

Low speed should qualify mobile terminals which are hold by pedestrians, walking users or which are on board of cars driving slowly in a city center for example. Low speed mobile terminals are moving with a speed around 3 km/h but can extend to 10 or 15 km/h.

High speed should qualify mobile terminals which are hold by people on board of fast moving vehicles cars, trains and so on. High speed mobile terminals are preferably moving with a speed higher than 25 km/h.

A hard speed limit between low and high speed mobile terminals is voluntary not given since it is an object of the present invention to distinguish mobile terminals moving slowly from fast moving mobile terminals. Indeed, these both category of mobile terminals should preferably be handled differently by the radio communication network.

The range between 15 km/h and 25 km/h at the interface between low speed and high speed mobile terminals is not so interesting in the context of the present invention since no big optimization can be achieved when handling these mobile terminals as low speed or as high speed mobile terminals.

According to the present invention, the raw bit error rate (BER) is made available at the base station subsystem. The raw bit error rate is either estimated at base station demodulator output upon reception of radio blocks from mobile terminals 111, 112, or estimated at the mobile terminal demodulator output upon reception of radio-blocks from base station subsystem 12 and further reported to base station subsystem 12. The raw bit error rate estimation is performed at burst level and preferably averaged over several consecutive bursts.

Preferably, the raw bit error rate estimation on a radio link is averaged on a window comprising N radio blocks, each radio block consisting in M bursts. In GPRS networks, it is usual to choose N=16 and M=4 which implies a raw bit error rate estimation averaged on 320 ms for a single slot mobile terminal alone. In GSM network, N is usually equal to 24 and each radio-block is interleaved over 8 bursts.

In a preferred embodiment of the present invention, the raw bit error rate estimation is mapped to RX_QUAL metric as defined in GSM specification 05.08. For this purpose, the estimated raw bit error rate is quantified into eight levels as follows:

| Estimated raw Bit Error Rate (%) | RX_QUAL (GSM 05.08) |
|---|---|
| [0 0.2] | 0 |
| [0.2 0.4] | 1 |
| [0.4 0.8] | 2 |

(continued)

| Estimated raw Bit Error Rate (%) | RX_QUAL (GSM 05.08) |
|---|---|
| [0.8 1.6] | 3 |
| [1.6 3.2] | 4 |
| [3.2 6.4] | 5 |
| [6.4 12.8] | 6 |
| > 12.8 | 7 |

The mapping between raw bit error rate and RX_QUAL parameters may be performed the Radio Link Control layer. This layer is usually supported by base station subsystem 12. More precisely, in GSM networks the radio link Control layer is supported by the BSC while in GPRS network it is supported by the packet control unit located between the BTS and the SGSN. Alternatively, the mapping can be performed at mobile terminals 111, 112 and forwarded to the Radio Link Control layer of the base station subsystem.

It will however be understood that the mapping between raw bit error rates and RX_QUAL parameters may be performed in other modules of the radio communication network without departing from the scope of the present invention.

According to the present invention, the variation between successive RX_QUAL parameter estimations is used to deduce if mobile terminal 111, 112 is a low or high speed mobile terminal.

If the variation between two successive RX_QUAL parameter estimations is higher than a predefined threshold, mobile terminal 111 is a low speed mobile terminal. On the contrary, if the variations between two consecutive RX_QUAL parameter estimation is lower than a predefined threshold, mobile terminal 112 is a high speed mobile terminal.

This behavior is explained by that fact that the faster the mobile speed is the lower the multipath fading correlation time is. Indeed, for slow moving mobile terminal 111, the estimated instant raw bit error rate can be far from the average raw bit error rate. Then, strong variations may happen between two successive estimations. On the contrary, in the case of a fast moving mobile terminal 112, the estimated instant raw bit error rate is closer to the average raw bit error rate. Then, there are low variations between consecutive instant raw bit rate estimations.

The threshold value is preferably chosen according to simulation results. If the information related to the raw bit error rate is RX_QUAL as defined in GSM specification 05.08, it is advantageous to choose the threshold in a short range around 1,5 or 2. A more precise determination of an adequate threshold should preferably take into account the importance of shadowing effects in the areas where the speed of the mobile terminals should be estimated.

As it will be understood by people skilled in the art, it is not necessary to use the RX_QUAL metric. The use of this metrics has only the advantage to simplify the processing of variations between successive estimations.

Any other usual information related to the raw bit error rate on the radio link between mobile terminal 111, 112 (e.g. the variations of the raw bit error rate itself) can be used in the framework of the present invention under the condition that the threshold value is adequately set. Moreover, the window selected to obtain averaged values of the information related to the raw bit error rate should be chosen with a relevant size.

The binary information related to the speed of mobile terminal 111, 112 is preferably used for optimizing functionality in the radio communication network which can advantageously make the handling of mobile terminals 111, 112 dependent on their speed.

Such functionality are for example the link adaptation, the adaptive multi-rate, the handover or the speed dependent service provision. These functionality will be described in following. It will be clear for a person skilled in the art that this list is not exhaustive : the binary information related to the speed of a mobile terminal obtained according to the present invention can be used in other applications.

Preferably, the module which performs the mapping between raw bit error rate and RX_QUAL value as well as the comparison with the predefined threshold informs the module which makes use of the speed information. Changes from high speed to low speed and vice versa are preferably forwarded to these modules.

Speed dependent link adaptation: the coding scheme used on the radio link should be selected among several coding schemes. The used coding scheme can advantageously be updated during a connection depending on the mobile terminal speed. For this purpose the binary information related to the mobile terminal speed should be estimated at regular time intervals. Indeed, for an identical raw bit error rate, the speed of the mobile terminal influences the block error rate at the decoder output. Moreover, the speed of the mobile terminal can be taken into account to determine filtering parameter used to filter RX_QUAL parameter. For example, the faster the mobile terminal speed, the higher the forgetting factor should be.

Speed dependant adaptive multirate: the source coder/ channel coder couple used on the radio link is selected out of several source coder /channel coder couples. The used couple can advantageously be updated during a connection depending on the mobile terminal speed. For this purpose the binary information related to the mobile terminal speed should be estimated at regular time intervals. Indeed, for an identical raw bit error rate, the speed of the mobile terminal influence the residual bit error rate at the channel decoder output.

Speed dependent handover: in a cellular radio communication network, handover is usually controlled from MSC 13 and aims at modifying the base station controlling a connection when the mobile terminal moves from one cell to anther cell. The knowledge that a mobile terminal 111, 112 is a low speed or a high speed mobile terminal can advantageously be exploited in network architectures consisting in a superposition of micro- and macro cells (especially in dense areas). In this case handover can gain in predictability since it is advantageous to hand over low speed mobile terminal 11 to micro-cells and high speed mobile terminal 112 to macro cells.. Indeed, it allows to counterbalance the load, to avoid fast terminals to perform successive handovers in strong radio conditions (i.e. fast channel quality degradation) and to decrease the mean handover load (thus, to decrease the mean processing load).

Speed dependent service provision : Service provision to mobile terminals 111, 112 is usually performed by a server 15 connected to radio communication network 14. A speed dependent service provision could advantageously be associated to location dependent services. Indeed it is unnecessary to propose services like a city guided tour to a high speed mobile terminal while it would be, on the contrary, advantageous to propose them to a low speed mobile terminal hold by a walking user.

Figure 2 shows a diagram representing the different steps of the method according to the present invention. This embodiment uses parameter RX_QUAL as information related to the raw bit error rate on the radio link between mobile terminal 111, 112 and base station 12.

Step 21 consists in estimating successive RX_QUAL parameters preferably for windows comprising N radio blocs.

Step 22 consists in evaluating the absolute value difference D_RX_QUAL between two consecutive RX_QUAL parameter estimations:

$$D\_RX\_QUAL\ [n] = \mid RX\_QUAL[n] - RX\_QUAL[n-1] \mid$$

Step 23 consists in filtering the values D_RX_QUAL to eliminate non representative values. Indeed, it has been proven by simulation that the variation of RX_QUAL are in average lower for high speed mobile terminals than for low speed mobile terminal. The filtering enables it get closer to the average value of RX_QUAL variations and obtain a better detection rate for low resp high speed mobile terminals.

For the purpose of filtering, a simple auto-regressive filter of order one (exponential filter) is used. Low forgetting factor values like 0.05 or 0.02 are preferably applied to obtain a good trade-off between filtering length and convergence time.

Moreover, the filtering step comprises a step of eliminating RX_QUAL variations equal to 0 or 7 to avoid any border effects.

FD_RX_QUAL may be obtained with the following algorithm:

$$\text{If } RX\_QUAL[n] = RX\_QUAL[n-1] = 0 \text{ or } RX\_QUAL[n] = RX\_QUAL[n-1] = 7 \;:$$

$$FD\_RX\_QUAL[n] = FD\_RX\_QUAL[n-1]$$

$$\text{Else:}$$

$$FD\_RX\_QUAL[n] = \alpha \, D\_RX\_QUAL[n] - (\alpha-1) \, FD\_RX\_QUAL[n-1] \text{ (exponential filter)}$$

It is to be noted that step 23 is optional, it contributes essentially to obtain more accurate results without departing from the scope of the present invention.

Step 24 consists in comparing the filtered value FD_RX_QUAL with a predefined threshold.

Step 25 consists in setting the binary information related to the speed of the mobile terminal to "low speed" if value FD_RX_QUAL is higher than the predefined threshold and to "high speed" if value FD_RX_QUAL is lower than the threshold.

The parameter RXQUAL estimation is performed at mobile terminals 111,112 or at base station subsystem 12.

Preferably, the method according to the present invention is performed at base station subsystem 12 which comprises means for calculating variations between successive value of RX_QUAL, means for comparing RX_QUAL variations with a predefined threshold and means for forwarding the binary information related to the speed of a mobile terminal over an interface to further modules of the radio communication network susceptible to exploit this information (e.g. link adaptation module, handover module, speed based service server...).

Alternatively, the method according to the present invention is performed at mobile terminals 111, 112, the binary information related to the speed of a mobile terminal being then forwarded to said base station subsystem 12.

Moreover, some steps of the methods can be performed at mobile terminals 111, 112 while the remaining steps can be performed at base station subsystem 12.

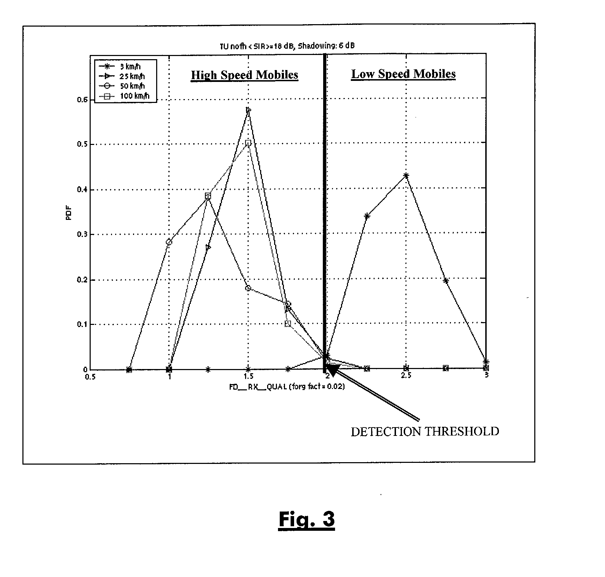

Figure 3 shows simulation results obtained with the method according to the present invention. Figure 3 presents the FD_RX_QUAL distribution for different mobile speed (3 km/h, 25 km/h, 50 km/h, 100 km/h) when the RX_QUAL estimation window is 16 radio-blocks for a typical shadowing standard deviation of 6 dB. FD_RX_QUAL distributions strongly depend on the mobile speed.

FD_RX_QUAL distributions are grouped together for any mobile speed superior to 25 km/h. Using a predetermined threshold on FD_RX_QUAL enables to separate low speed mobiles from high speed mobiles. Consequently, FD_RX_QUAL is a good estimation of the mobile speed.

The method according to the present invention provides excellent low speed mobile detection rate. Following table gives the slow/fast mobile detection rates for different mobile speeds in a TU channel profile when the noise consists in co-channel interference. The average Signal to Interference ratio is 18 dB and the signal shadowing standard deviation is equal to 6 dB. RX_QUAL estimation window consists of 16 radio-blocks. Detection threshold is equal to 2. Slow (resp. fast) mobile detection rate is the number of FD_RX_QUAL superior (resp. inferior) to this threshold compared the total number of FD_RX_QUAL. For each mobile speed, 10 simulations of 3200 radio-blocks were performed. One simulation of 3200 radio-blocks consists of 200 RX_QUAL reports.

| Mobile Speed | 3 km/h | 25 km/h | 50 km/h | 100 km/h |
|---|---|---|---|---|
| Low speed detection rate | 0.92 | 0.03 | 0.02 | 0.03 |
| High speed detection rate | 0.08 | 0.97 | 0.98 | 0.97 |

## Claims

1.	Method for determining a binary information related to the speed of a mobile terminal (111, 112) in a radio communication network (12, 13, 14), said method comprising the steps of:

- estimating information related to the raw bit error rate on the radio link between said mobile terminal (111, 112) and said radio communication network (12);
- determining an indicator on the variation between successive information related to the bit error rate;
- comparing said indicator on the variation between successive information related to the raw bit error rate with a predefined threshold;
- determining said binary information related to the speed of said mobile terminal (111, 112) depending on the comparison between said indicator on the variation between successive information related to the raw bit error rate and said predefined threshold.

2.	Method according to claim 1, wherein said binary information related to the speed of a mobile terminal (111, 112) indicates if the speed of said mobile terminal (111, 112) is lower than a first speed limit or higher than a second speed limit.

3.	Method according to claim 2, wherein said indicator on the variation between successive information related to the raw bit error rate corresponds to the variation between successive RX_QUAL parameters as defined in GSM specification 05.08.

4.	Method according to claim 3, wherein the binary information related to the mobile terminal speed corresponds to a low speed mobile terminal when the variation of RX_QUAL parameter is higher than said predefined threshold.

5.	Method according to claim 4, wherein said predefined threshold is chosen between 1,5 and 2.

6.	Method according to claim 1, wherein RX_QUAL parameters are calculated over a window containing N radio blocks.

7.  Method according to claim 1, further comprising the step of filtering RX_QUAL variations before comparing said RX_QUAL variations with said threshold.

8.  Method according to claim 1, further comprising the step of using said binary information related to the speed of a mobile terminal for applications in the group of link adaptation, adaptive multirate, handover, customized service provision.

9.  Base station subsystem (12) of a radio communication system (12, 13, 14) comprising means for estimating information related to the raw bit error rate on a radio link to a mobile terminal (111, 112), said base station subsystem being **characterised in that** it further comprises:

    -   means for determining an indicator on the variation between successive information related to the bit error rate;
    -   means for comparing said indicator on the variation between successive information related to the raw bit error rate with a predefined threshold;
    -   means for determining a binary information related to the speed of said mobile terminal depending on the comparison between said indicator on the variation between successive information related to the raw bit error rate and said predefined threshold.

10. Mobile terminal (111, 112) of to a radio communication system (12, 13, 14) comprising means for estimating information related to the raw bit error rate on a radio link to a mobile terminal (111, 112), said mobile terminal being **characterised in that** it further comprises:

    -   means for determining an indicator on the variation between successive information related to the bit error rate;
    -   means for comparing said indicator on the variation between successive information related to the raw bit error rate with a predefined threshold;
    -   means for determining a binary information related to the speed of said mobile terminal depending on the comparison between said indicator on the variation between successive information related to the raw bit error rate and said predefined threshold.

111

14

BSS    MSC

112

12    13

15

**Fig 1**

21

22

23

24

25

26

**Fig. 2**

Fig. 3

European Patent
Office

## EUROPEAN SEARCH REPORT

Application Number

EP 03 29 0697

### DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | WO 01 69960 A (POPPLE MARTIN ;SIMOCO INT LTD (GB)) 20 September 2001 (2001-09-20) <br> * page 1, line 37 - page 4, line 4 * <br> * page 5, line 12-22 * <br> * page 6, line 20 - page 7, line 1 * <br> * page 11, line 7-24 * <br> * page 12; table 2 * <br> --- | 1-10 | G01S11/02 |
| X <br><br> A | US 2001/044306 A1 (SHIMONO FUMIHISA ET AL) 22 November 2001 (2001-11-22) <br> page 1: par. [0018]-[0020]; page 2: par. [0040]-[0044]; page 5: par. [0080]-[0090], [0095]-[0098] <br> * figures 5,6 * <br> --- | 1,2,9,10 <br><br> 3-8 | |
| X <br><br> A | WO 99 57934 A (ERICSSON TELEFON AB L M) 11 November 1999 (1999-11-11) <br> * page 8, line 14-22 * <br> * page 9, line 16-18 * <br> --- | 1,9,10 <br><br> 2-8 | |
| A | US 2001/012781 A1 (SUZUKI ISAO) 9 August 2001 (2001-08-09) <br> * abstract * <br> par.: [0015]-[0023], [0047]-[65] <br> * figures 4-6 * <br> ----- | 1-10 | TECHNICAL FIELDS SEARCHED (Int.Cl.7) <br><br> G01S <br> H04Q |

The present search report has been drawn up for all claims

| Place of search | Date of completion of the search | Examiner |
|---|---|---|
| MUNICH | 7 August 2003 | Möll, H-P |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 03 29 0697

This annex lists the patent family members relating to the patent documents cited in the above-mentioned European search report.
The members are as contained in the European Patent Office EDP file on
The European Patent Office is in no way liable for these particulars which are merely given for the purpose of information.

07-08-2003

| Patent document cited in search report | | Publication date | Patent family member(s) | | Publication date |
|---|---|---|---|---|---|
| WO 0169960 | A | 20-09-2001 | AU | 4080801 A | 24-09-2001 |
| | | | EP | 1183896 A1 | 06-03-2002 |
| | | | WO | 0169960 A1 | 20-09-2001 |
| | | | GB | 2367201 A | 27-03-2002 |
| US 2001044306 | A1 | 22-11-2001 | JP | 2001320751 A | 16-11-2001 |
| WO 9957934 | A | 11-11-1999 | US | 6560205 B1 | 06-05-2003 |
| | | | WO | 9957934 A1 | 11-11-1999 |
| | | | AU | 4301899 A | 23-11-1999 |
| | | | BR | 9910059 A | 26-12-2000 |
| | | | CA | 2330129 A1 | 11-11-1999 |
| | | | JP | 2002514872 T | 21-05-2002 |
| | | | CA | 2329950 A1 | 11-11-1999 |
| | | | CN | 1298619 T | 06-06-2001 |
| | | | EP | 1078482 A1 | 28-02-2001 |
| | | | JP | 2002514035 T | 14-05-2002 |
| | | | WO | 9957827 A1 | 11-11-1999 |
| US 2001012781 | A1 | 09-08-2001 | JP | 3388215 B2 | 17-03-2003 |
| | | | JP | 2001218258 A | 10-08-2001 |
| | | | CN | 1316865 A | 10-10-2001 |
| | | | GB | 2365272 A ,B | 13-02-2002 |